# EUROPÄISCHE PATENTSCHRIFT

(11) **EP 0 907 061 B1**
(45) Veröffentlichungstag und Bekanntmachung des Hinweises auf die Patenterteilung: **26.05.2004**
(21) Anmeldenummer: 98118368.4
(22) Anmeldetag: 29.09.1998
(51) Int. Cl.: F28D 1/02, F28F 1/16, B60H 1/00

(54) **Wärmeübertrager für eine Heiz- oder Klimaanlage eines Kraftfahrzeuges**
Heat exchanger for an air conditioning system of an automotive vehicle
Echangeur de chaleur pour une installation de climatisation d'un véhicule automobile

(30) Priorität: 01.10.1997 DE 19743426
(43) Veröffentlichungstag der Anmeldung: 07.04.1999
(73) Patentinhaber: Behr GmbH & Co., 70469 Stuttgart (DE)
(72) Erfinder: Damsohn, Herbert, Dr. Ing., 73773 Aichwald (DE); Derleth, Martin, Dipl.-Ing. (FH), 74523 Schwäbisch Hall-Sulzdorf (DE); Luz, Klaus, Dipl.-Ing., 71083 Herrenberg (DE); Schmid, Markus, Dipl.-Ing., 73779 Deizisau (DE); Stemmler, Martin, Dr. rer. nat., 34125 Kassel (DE); Wolf, Walter, Dipl.-Ing., 71570 Oppenweiler-Zell (DE)
(74) Vertreter: Grauel, Andreas, Dr.

(56) Entgegenhaltungen:
- EP-A- 0 248 222
- WO-A-93/17290
- FR-A- 2 339 830
- FR-A- 2 567 255
- US-A- 1 887 035
- Prospekt der Firma Süddeutsche Kühlerfabrik Julius Fr. Behr GmbH & Co.Kg, Klima-Anlagen für Kraftfahrzeuge

## Beschreibung

Die Erfindung betrifft einen Wärmeübertrager für eine Heizoder Klimaanlage eines Kraftfahrzeuges gemäß den Merkmalen des unabhängigen Patentanspruchs 1.

Wärmeübertrager der eingangs genannten Art sind bekannt (Behr Klimaanlagen, Prospekt der Firma Behr GmbH & Co., Stuttgart). Bei diesen Heiz- oder Klimaanlagen für Personen und Nutzkraftwagen ist, wie auch bei den entsprechenden Heiz- oder Klimaanlagen anderer Hersteller, stets ein zentraler in bekannter Weise aus einem Rippenrohrblock aufgebauter Wärmeübertrager für das Heizmedium vorgesehen. Die zu temperierende Luft wird dem Wärmeübertrager über ein Gebläse zugeführt. Die zu temperierende Luft, die ggf. auch noch zu Kühlzwecken durch einen zusätzlichen Wärmeübertrager geführt wird, wird dann durch weitere Strömungskanäle zu Ausströmdüsen weitergeführt, die am Armaturenbrett und unterhalb desselben, sowie im Fondraum verteilt angeordnet sind. Es wird darüber hinaus in der Regel notwendig, aus Stabilitätsgründen ein Tragrohr im Cockpit anzuordnen, so daß sich dadurch ein sehr großer Bauraumbedarf im Fahrzeug, insbesondere im Bereich der Mittelkonsole, ergibt.

Die FR-A-2339830 offenbart ein Verfahren zur Herstellung eines Wärmetauschers.

Die WO 93/17290 offenbart einen Wärmetaucher dessen Kern aus Modulen gebildet ist.

Der vorliegenden Erfindung liegt die Aufgabe zugrunde, einen Wärmeübertrager für eine Heiz- oder Klimaanlage eines Kraftfahrzeuges so auszubilden, daß der Bauraumbedarf und der Aufwand für die Luftführung wesentlich kleiner gehalten werden kann.

Zur Lösung dieser Aufgabe wird bei einem Wärmeübertrager der eingangs genannten Art vorgeschlagen, daß die Führungskanäle von mehreren durch Stege voneinander getrennten und nebeneinander liegenden Kammern eines Profils in der Form eines Flachrohres gebildet sind, das angrenzend an die Kammern mit nach außen stehenden Rippen versehen sind, daß die zwischen den Rippen bestehenden Räume durch einen Außenmantel als Strömungskanäle für die zu temperierende Luft ausgebildet sind, und daß seitlich an die äußersten Kammern angrenzende Rohre als Zu- uns Ablauf für das Heiz- oder Kühlmedium vorgesehen sind, die parallel zu den Kammern ausgerichtet sind und die auf einer vorbestimmten, als Sammelkasten dienenden Länge mit Öffnungen ausgerüstet sind, die in Bereiche des Flachrohres münden, in denen die Stege zwischen den Kammern entfernt sind.

Durch diese Ausgestaltung wird ein gesonderter Einbauraum für einen Rippenrohrblock des Wärmeübertragers überflüssig. Auch zusätzliche Luftströmungskanäle können entfallen. Es wird vor allen Dingen möglich, den Wärmeübertrager selbst durch entsprechenden Anordnung der Sammelkästen und Einströmbereiche an die Stellen zu verlegen, an denen eine Temperierung erwünscht ist. Dies ist insbesondere bei längeren Luftströmungskanalstrecken, z.B. bei Verlegung in den Fondraum von Vorteil, weil der Wärmeübertrager nach der Erfindung erst kurz vor den entsprechenden Ausströmdüsen angeordnet werden kann. Energieverluste können so minimiert werden. Der Wärmeübertrager nach der Erfindung läßt sich so sehr vorteilhaft für Klimaanlagen von Kraftfahrzeugen verwenden.

Durch die Erfindung wird der Wärmeübertrager zu einer Einheit mit den notwendigen Strömungskanälen. Die als Zu- und Abführleitungen dienenden Rohre sorgen zusammen mit der übrigen Ausbildung des Profiles auch für die notwendige Stabilität. Die Profile lassen sich einschließlich der seitlich an ihnen sitzenden Rohre in verhältnismäßig einfacher Weise so biegen und verlegen, wie es gewünscht ist. Die Rohre bilden dabei auch Versteifungen und können durch weitere, beispielsweise eingesteckte Rohre zu einer steifen Tragstruktur erweitert sein. Diese Tragstruktur kann auch als tragendes Bauteil, z.B. im Bereich des Armaturenbrettes dienen, so daß sie Teil des tragenden Skelettes sind.

In Weiterbildung der Erfindung können auch die als Zu- und Ablauf und Versteifung dienenden Rohre Teil des Profiles sein, so daß eine besonders einfache Herstellung möglich wird. Das Profil kann als ein Strangpreßprofil ausgebildet sein. Möglich ist seine Herstellung aber auch aus zwei Blechschalen und zwei Lagen eines gewellten Rippenbleches, die verlötet werden.

In Weiterbildung der Erfindung sind die Bereiche des Flachrohres, in denen die Stege zwischen den Kammern entfernt sind, d.h. also die Ein- und Abströmbereiche als rechtwinklige Dreiecke ausgebildet sein, wobei die Katheten jeweils von den Öffnungen des zugeordneten Rohres und von einer geschlossenen Wand und die Hypotenuse als eine die freien Enden der Stege verbindende Gerade ausgebildet sind.

In Weiterbildung der Erfindung kann als Abschluß der Stege eine unter 45° zu der Längsachse des Strangprofiles verlaufende Gerade vorgesehen sein.

In weiterer Ausgestaltung der Erfindung kann zweckmäßigerweise vorgesehen werden, daß der Zu- und der Ablaufbereich des Mehrkammerflachrohres jeweils gleich ausgebildet, aber so angeordnet wird, daß die jeweils zugeordneten Abschlußgeraden zueinander parallel verlaufen. Auf diese Weise ergibt sich nämlich die gleiche Strömungslänge für die Führungskanäle des Mehrkammerflachprofiles, so daß auch an allen Stellen der gleiche Wärmeübergang stattfinden kann.

In Weiterbildung der Erfindung können schließlich die die Strömungskanäle für die Luft bildenden Rippen einen Zickzackverlauf aufweisen, so daß die Strömungswege für den Wärmeübergang länger werden. Es ist beim Strangpreßverfahren bekannt, daß man außenliegende Bereiche eines Strangpreßprofiles durch entsprechende bewegliche Teile entsprechend quer zur Strangpreßrichtung verformen und dadurch einen Zickzackverlauf erreichen kann.

In Weiterbildung der Erfindung ist schließlich der Außenmantel, der die Rippen abdeckt, in vorteilhafter Weise als ein Kunststoffschaumgehäuse z.B. aus EPP ausgebildet, das an der Außenseite formschön ausgestaltet werden kann. Auf diese Weise können die neuen Wärmeübertragungsleitungen auch unmittelbar als isolierende Verkleidungsteile, beispielsweise für das Cockpit, aber auch für andere Bereiche des Innenraumes, z.B. im Fondraum ausgebildet werden. In allen Fällen ist es auch möglich, die durch die Strömungskanäle strömende Luft im Gegenstrom zu erwärmen oder zu kühlen und die Verlustwärme der Zu- und Ablaufrohre wird zur Erwärmung der Luft genutzt.

Die Erfindung ist anhand eines Ausführungsbeispieles in der Zeichnung dargestellt und wird im folgenden beschrieben. Es zeigen:
- Fig. 1: die schematische perspektivische Ansicht eines Teiles des Innenraumes eines Personenkraftwagens, der mit Wärmeübertragern nach der Erfindung ausgerüstet ist,
- Fig. 2: die vergrößerte Darstellung des Schnittes nach der Linie II-II in Fig. 1 durch einen der Wärmeübertrager nach der Erfindung,
- Fig. 3: die Schnittdarstellung des Wärmeübertragers der Fig. 2 längs der Schnittlinie III-III in Fig. 2,
- Fig. 4: die vergrößerte Darstellung des für den Wärmeübertrager der Fig. 1 bis 3 verwendeten Strangpreßprofiles,
- Fig. 5: die Schnitt- bzw. Ansichtdarstellung einer Teillänge des Strangpreßprofiles der Fig. 4 in Richtung der Linie V-V der Fig. 4 gesehen,
- Fig. 6: die perspektivische Teildarstellung des aus dem Profil der Fig. 4 gebildeten Wärmeübertragers vor der Umschäumung,
- Fig. 7: einen Wärmeübertrager in einer anderen Ausführungsform, und
- Fig. 8: Wärmeübertrager nach Fig. 7 als Teil einer Tragkonstruktion für ein Armaturenbrett.

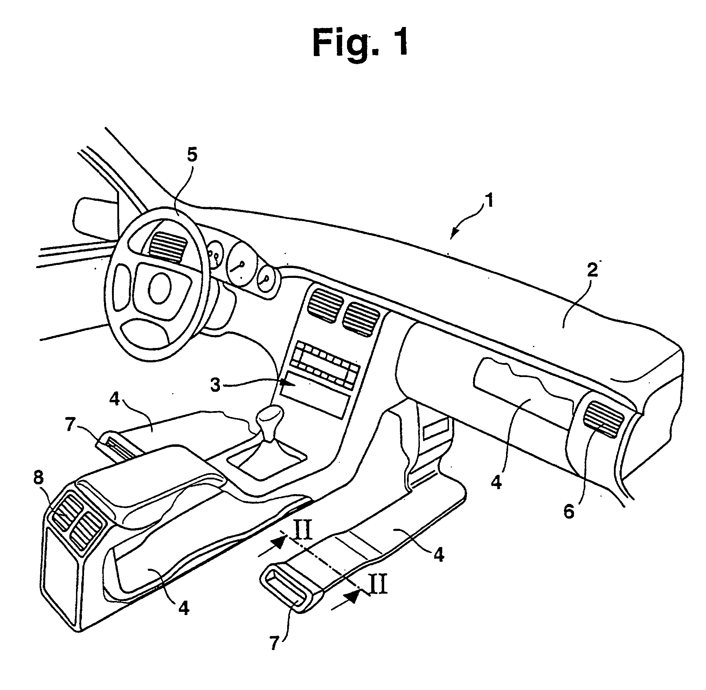

In der Fig. 1 ist schematisch ein Teil des Cockpits 1 mit dem quer unter einer nicht näher gezeigten Windschutzscheibe verlaufenden Armaturenbrett 2 und einer Mittelkonsole 3 gezeigt und es ist zu erkennen, daß innerhalb des Armaturenvorbaus 2 Strömungsleitkanäle 4, z.B. zu der vom Lenkrad 5 abgewandten Ausströmdüse 6 und weitere solcher Strömungskanäle 4 zu den anderen nicht näher bezeichneten Ausströmdüsen im Bereich des Armaturenvorbaus 2 sowie zu Ausströmdüsen 7 und 8 im Bereich des -fondraumes geführt sind.

Durch die Strömungskanäle 4, deren Aufbau noch anhand der anderen Figuren näher erläutert werden wird, wird die zur Innenraumtemperierung benötigte Luft geführt, die in an sich bekannter Weise von außen angesaugt, gereinigt und dann über ein Gebläse weitergefördert wird. Im Gegensatz zu Heiz- oder Klimaanlagen nach dem Stand der Technik ist jedoch kein zentraler oder kleinerer Wärmetauscher im Bereich der Mittelkonsole 3 vorgesehen, sondern die entsprechenden Zuführungen für Heiz- oder Kühlmittel sind unmittelbar den Strömungskanälen 4 zugeordnet, wie noch erläutert wird.

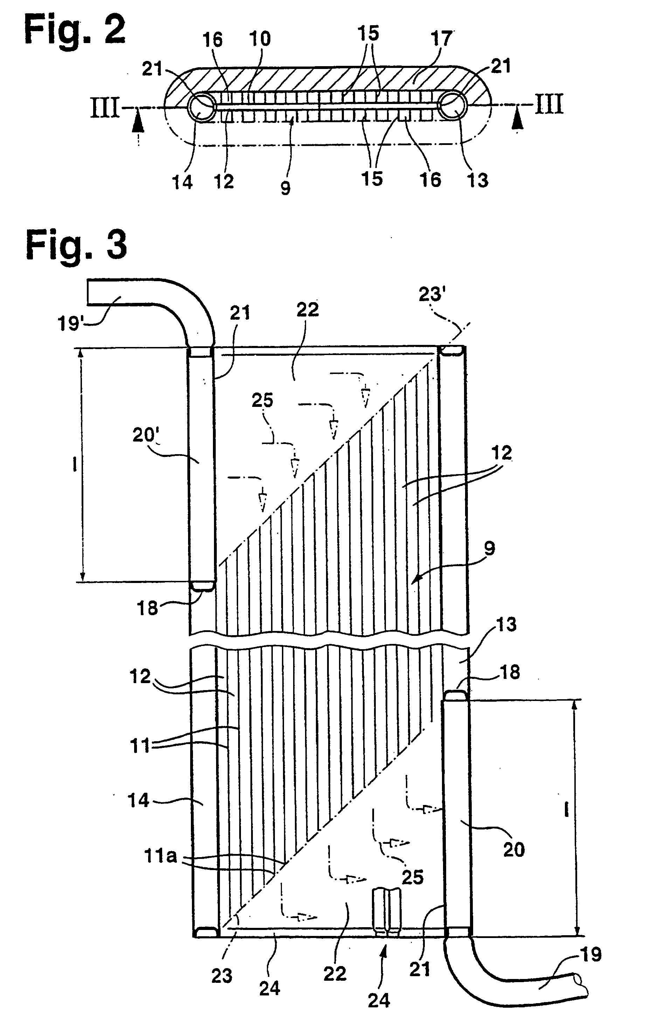

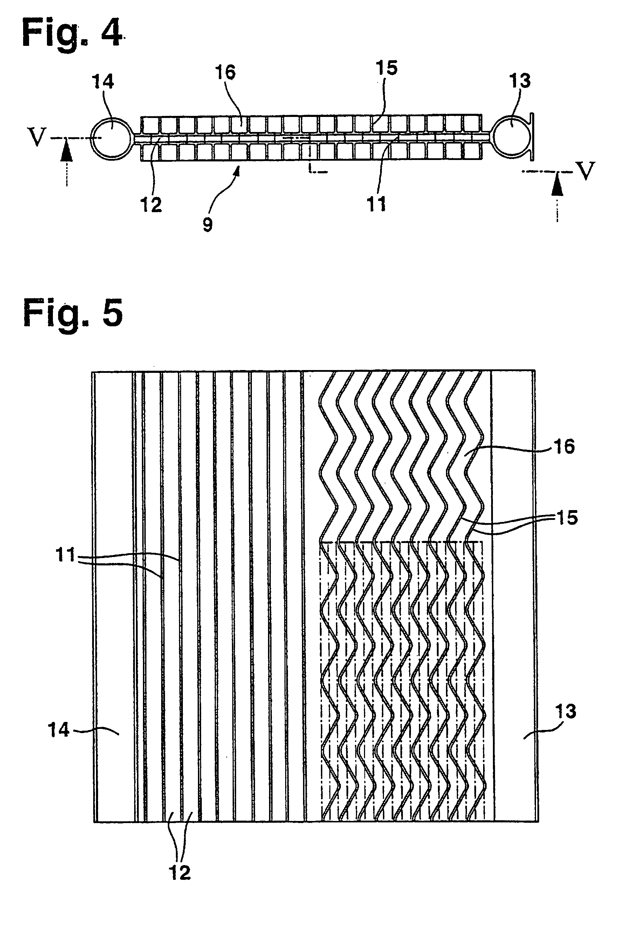

Die Fig. 2 zeigt, daß die Strömungskanäle 4 aus einem im übrigen in den Fig. 4 und 5 noch näher gezeigten Strangpreßprofil 9 besteht, das im wesentlichen aus einem zentralen Flachrohr 10 mit mehreren durch Stege 11 voneinander abgegrenzten Kammern 12 besteht, die alle in einer gemeinsamen Ebene nebeneinander liegen und parallel zueinander verlaufen.

Das Strangpreßprofil 9 ist auf den beiden seitlich an die jeweils äußerste Kammer 12 angrenzenden Rändern mit parallel zu den Kammern 12 verlaufenden Rohren 13 und 14 versehen, die beim Ausführungsbeispiel einstückig mit dem Strangpreßprofil 9 gebildet sind. Die Rohre 13 und 14 überragen das mittlere Mehrkammerflachprofil nach oben bis zu einer Höhe, in der freien Außenkanten von Rippen 15 enden, die beidseitig vom Flachkammerprofil 10 aus nach außen abstehen. Die von diesen Rippen 15 eingeschlossenen Räume 16 sind von einem Außenmantel 17 abgedeckt, der beispielsweise aus einem Kunststoffschaum aus EPP gebildet ist und ein Gehäuse bildet, dessen Außenflächen formschön ausgebildet sein können. Die Räume 16 zwischen den Rippen 15 bilden Strömungskanäle für die durch das Gebläse geförderte Luft, die dann an den Ausströmdüsen 6 bzw. 7 oder 8 in den Fahrzeuginnenraum treten kann.

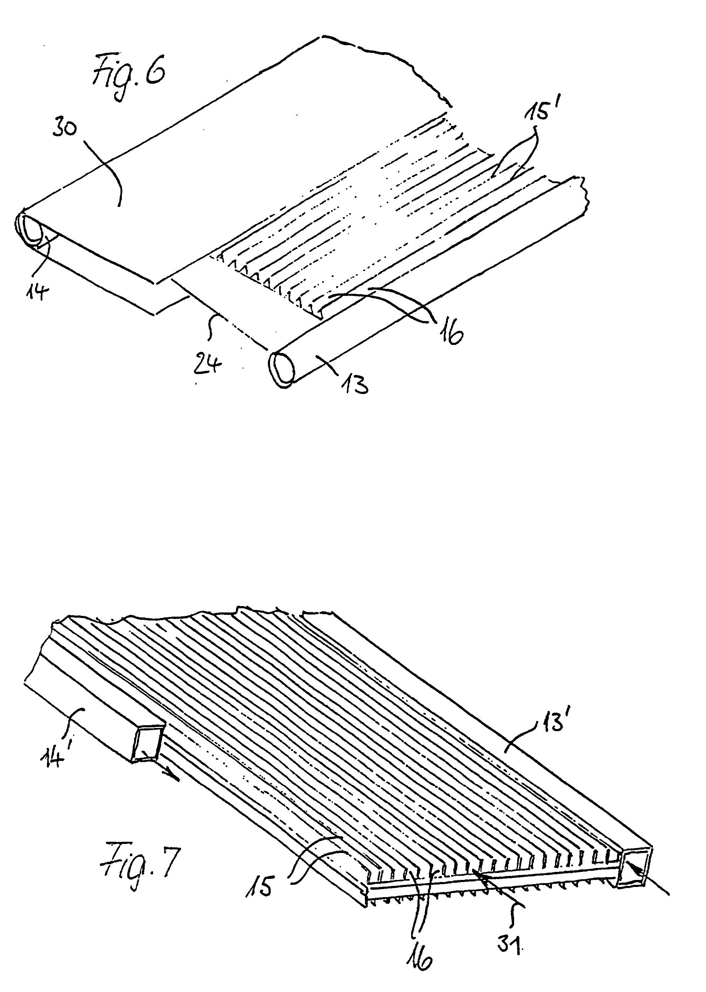

Die Fig. 6 zeigt dabei, daß die Rippen 15', die hier einen dreieckförmigen Querschnitt aufweisen, aber durchaus auch die Form der Rippen 15 nach Fig. 2 haben können, zusammen mit den Rohren 13 und 14 von einer Hülle 30 in der Form eines Netzes oder Tuches, von dem nur die linke Hälfte gezeigt ist, umgeben sind, die es erlaubt, den Wärmeübertrager zu umschäumen, ohne die Strömungskanäle 16 zu beeinflussen, oder ihn in eine vorgefertigte Schaumstoffform einzuschieben.

Wie der Fig. 5 entnommen werden kann, sind die Rippen 15 bei der Herstellung des Strangpreßprofiles 9 als im Zickzack verlaufende Rippen ausgebildet, so daß auch die Strömungskanäle 16 im Zickzack verlaufen. Diese Ausgestaltung ist bei der Herstellung durch Strangpreßverfahren durch die Anordnung beweglicher Werkzeugteile möglich.

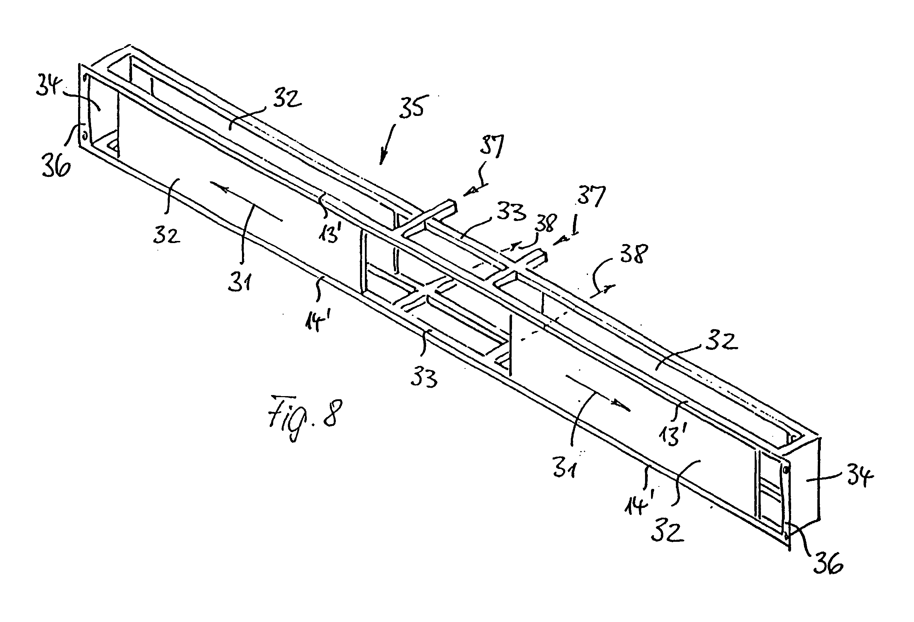

Die seitlich von den Kammern 12 angeordneten Rohre 13 und 14 bilden Versteifungen für das Profil und können als Tragrohre für die Konstruktion dienen, wie das beispielhaft in den Fig. 7 und 8 erläutert ist. Sie lassen sich durch an ihren Enden aufgesteckte Rohre zu einer geeigneten Tragkonstruktion verlängern. Die Rohre 13 und 14 dienen auch zur Zu- und Abführung des Heiz- oder Kühlmediums, d.h. also zur Zuführung des erhitzten Motorkühlwassers zum Zweck der Heizung oder, wenn eine Kühlung erforderlich ist, zur Zuführung eines mit einer Kühlanlage in Verbindung stehenden Kühlmediums (Sole). Das Heiz- oder Kühlmedium selbst wird von den Rohren 13 und 14 in die Kammern 12 geführt, wie dies anhand von Fig. 3 deutlich gemacht werden soll.

Die Fig. 3 zeigt, daß in das Rohr 13 eine Abschlußkappe 18 und eine ebensolche Abschlußkappe in das Rohr 14 eingepresst ist, so daß jeweils ein Anschlußleitungsteil 19 an das offene Ende des jeweiligen Rohres 13 bzw. 14 gelegt werden kann und so beispielsweise Heizmedium nur über den der Länge l entsprechenden Teil des Rohres 13 abgeführt und über den Bereich 20' und über die Zuführleitung 19' zugeführt werden kann. Die Rohre 13 und 14 sind zu diesem Zweck über die Länge 1 im Bereich 20 mit schlitzartigen Öffnungen 21 versehen. Damit diese Öffnungen 21 nicht nur in die äußerste Kammer 12 des Mehrkammerprofiles 10 münden, sondern alle Kammern 12 mit dem zu- oder abgeführten Heizmedium beaufschlagen können, sind in dem dreieckförmigen Bereich 22 des Mehrkammerflachrohres 10 die Stege 11 zwischen den einzelnen Kammern 12 so entfernt worden, daß eine die freien Enden 11a der Stege 11 verbindende Gerade 23 bzw. 23' die Hypotenuse eines, beim Ausführungsbeispiel, gleichschenkligen rechtwinkligen Dreiecks bildet, dessen Katheten von der schlitzförmigen Öffnung 21 und von einer durch Zusammenquetschen des Flachrohres 10 gebildeten geschlossenen Seite 24 gebildet werden. Die Bereiche 22 und die zugehörigen Bereiche 20, 20' der Rohre 13, 14 bilden daher die Sammelräume für das durch die Kammern 12 strömende Heiz- oder Kühlmedium. Fig. 3 zeigt im Schnitt einen Teil dieser geschlossenen Seite 24.

Wie Fig. 3 im übrigen aber auch erkennen läßt, verlaufen die beiden, die freien Enden 11a der Stege 11 verbindenden Geraden 23 bzw. 23' parallel zueinander, so daß der vom Heizmedium, das im Sinn der Pfeile 25 ein- und auch wieder aus dem Mehrkammerprofil austritt, jeweils in den Kammern 12 zurückgelegte Strömungsweg jeweils gleich lang ist, so daß der Wärmeübergang in allen Bereichen des durch die Kammern 12 und die an diese jeweils beidseitig angrenzenden Strömungskanäle 16 gebildeten Wärmeübertragers gleich groß ist. Beim Ausführungsbeispiel der Fig. 3 kann die durch die Strömungskanäle 16 (die im Zickzack verlaufen) geführte Luft im Gegenstrom zu der Strömungsrichtung 25 des Heizmediums geführt werden, was im einzelnen aber nicht dargestellt ist. Die aus dem Strangpreßprofil 9 gebildeten Wärmeübertrager bilden auf diese Art auch die Führungskanäle für die Luft. Die neuen Strömungskanäle, die gleichzeitig auch Wärmeübertrager sein können, lassen sich, insbesondere wenn das Strangpreßprofil aus Aluminium hergestellt worden ist, verhältnismäßig leicht verformen und so an den gewünschten Strömungsverlauf anpassen. Die Kunststoffverkleidung 17 ist ebenfalls ohne weiteres in gewissen Grenzen verformbar. Es ist aber auch möglich, von vorneherein das Kunststoffschaumgehäuse in der gewünschten Weise auszulegen, wenn die Rohre 13 und 14 eine Versteifungs- und Tragfunktion ausüben, wie vorher erwähnt. So kann das Gehäuse z.B. als ein Bodenfüllstück ausgebildet sein, das zwischen Karosserieboden und Teppichboden des Innenraumes eines Fahrzeuges angeordnet wird. Möglich ist es auch, das Oberteil des Gehäuses, wenn es zweiteilig aus einem Ober- und Unterteil aufgebaut ist, zwischen denen der Wärmetauscher angeordnet ist, unmittelbar mit dem Bodenbelag zu kaschieren und den Fahrzeugboden bilden zu lassen. Das Oberteil kann aber auch als Deckschale einer Instrumententafel ausgebildet werden, wobei die seitlichen Rohre gleichzeitig die Tragkonstruktion für zumindest einen Teil des Armaturenbrettes bilden. Die Erfindung eröffnet eine Vielzahl von Einsatzmöglichkeiten für Klimaanlagen von Kraftfahrzeugen.

Die Fig. 7 und 8 machen den Einsatz der Wärmeübertrager nach der Erfindung als Teil der Tragkonstruktion deutlich.

Die Fig. 7 zeigt einen Wärmeübertrager, wie er im Prinzip in den Fig. 2 und 3 bzw. 6 gezeigt ist, allerdings mit dem Unterschied, daß die Rohre 13' und 14' die zur Zu- und Abfuhr des Heiz- oder Kühlmediums, d.h. zur Zuführung des erhitzten Motorkühlwassers zum Zweck der Heizung oder auch, wenn eine Kühlung erforderlich sein sollte, zur Zufuhr eines Kühlmediums dienen, keinen runden Querschnitt, sondern einen rechtekkigen, insbesondere quadratischen Querschnitt aufweisen. Die übrige Ausgestaltung weicht nicht von jener der Fig. 2 und 3 ab.

Die Fig. 8 zeigt nun, daß vier Wärmetauscher 32, die alle in der in Fig. 7 gezeigten Art ausgebildet sind, durch Verbindungsrohre 33 und Endstücke 34 zu einem Querträger 35 zusammengesetzt sind, der mit seinen beiden äußeren Befestigungsenden 36 unmittelbar an den A-Säulen eines Kraftfahrzeuges befestigt werden kann. Der Träger 35 bildet daher ein Tragskelett im Bereich des Armaturenbrettes, und er bildet gleichzeitig das Grundgerüst für die Anordnung von Wärmeübertragern 32, die zur Heizung und Klimatisierung des Fahrzeuginnenraumes im Sinn der Fig. 1 verwendet werden können. Dabei erfolgt die Zufuhr des Heiz- oder Kühlmediums jeweils im Sinn der Pfeile 37 und die Abfuhr im Sinn der Pfeile 38. Die Rohrteile 33 werden dabei nicht vom Heiz- oder Kühlmedium durchflossen und können entsprechend abgedichtet werden. Die zu temperierende Luft wird im Sinn der Pfeile 31 durch die Wärmeübertrager in einem nicht näher gezeigten, zentral angeordneten Gebläse ausgeführt, und sie kann dann im temperierten Zustand seitlich oder nach oben im Bereich des Armaturenbrettes austreten. Die in der Fig. 8 gezeigte Tragkonstruktion nützt daher den Aufbau des Wärmeübertragers aus stabilen Rohren 13', 14' dazu aus, durch zusätzliche Rohre 33 zusätzlich zum Wärmeübertrager auch noch eine Tragkonstruktion zu bilden.

## Patentansprüche

1. Wärmeübertrager für eine Heiz- oder Klimaanlage eines Kraftfahrzeuges bestehend aus mehreren parallel zueinander verlaufenden, in Sammelkästen mündenden Führungskanälen für ein Heiz- oder Kühlmedium und aus mit den Außenflächen dieser Führungskanäle in Berührung stehenden Strömungskanälen für die zu temperierende Luft, wobei die Führungskanäle von mehreren durch Stege (11) voneinander getrennten und nebeneinander liegenden Kammern (12) eines Profils (9) in der Form eines Flachrohres gebildet sind, das angrenzend an die Kammern (12) mit nach außen abstehenden Rippen (15) versehen ist,
**dadurch gekennzeichnet,**
**daß** die zwischen den Rippen bestehenden Räume (16) durch einen Außenmantel (17) als Strömungskanäle für die zu temperierende Luft ausgebildet sind,
und **daß** seitlich an die äußersten Kammern angrenzende Rohre (13, 14) als Zu- und Ablauf für das Heiz- oder Kühlmedium vorgesehen sind, die parallel zu den Kammern ausgerichtet sind und die auf einer vorbestimmten, als Sammelkasten dienenden Länge (1) mit Öffnungen (21) ausgerüstet sind, die in Bereiche (22) des Flachrohres (10) münden, in denen die Stege (11) zwischen den Kammern (12) entfernt sind.

2. Wärmeübertrager nach Anspruch 1, **dadurch gekennzeichnet, daß** die Öffnungen in den Rohren (13, 14) als Schlitze (21) ausgebildet sind.

3. Wärmeübertrager nach Anspruch 1, **dadurch gekennzeichnet, daß** die Rohre (13, 14) als versteifende Tragrohre ausgebildet sind.

4. Wärmeübertrager nach Anspruch 1, **dadurch gekennzeichnet, daß** die Rohre (13, 14) Teil des Profiles (9) sind.

5. Wärmeübertrager nach einem der Ansprüche 1 bis 4, **dadurch gekennzeichnet, daß** das Profil ein Strangpreßprofil (9) ist.

6. Wärmeübertrager nach Anspruch 1, **dadurch gekennzeichnet, daß** die Bereiche (22), die Teile der Sammelräume sind, die Form von rechtwinkligen Dreiecken aufweisen, wobei die Katheten von dem mit den Öffnungen (21) versehenen Teilen der Rohre (13, 14) und von einer geschlossenen Kante (24) des Strangpreßprofiles (11) und die Hyptenuse als eine die freien Enden (11a) der Stege (11) verbindende Gerade (23 bzw. 23') ausgebildet sind.

7. Wärmeübertrager nach Anspruch 6, **dadurch gekennzeichnet, daß** die Geraden (23, 23') unter 45° zu den Längsachsen der Kammern (12) verlaufen.

8. Wärmeübertrager nach Anspruch 6, **dadurch gekennzeichnet, daß** der Zu- und Ablaufbereich (22) jeweils gleich, aber so angeordnet ist, daß die Abschlußgeraden (23, 23') zueinander parallel verlaufen.

9. Wärmeübertrager nach Anspruch 1, **dadurch gekennzeichnet, daß** die Rippen (15) zickzackförmig angeordnet sind.

10. Wärmeübertrager nach Anspruch 1, **dadurch gekennzeichnet, daß** der Außenmantel von einem Kunststoffschaumgehäuse (17) gebildet ist.

11. Wärmeübertrager nach Anspruch 10, **dadurch gekennzeichnet, daß** die Rippen (15, 15') und die Rohre (13, 14, 13', 14') von einer Hülle (30) umgeben sind, die innerhalb des Kunststoffschaumgehäuses liegt.

12. Wärmeübertrager nach Anspruch 1, **dadurch gekennzeichnet, daß** der Außenmantel mit einem unmittelbar die Innenfläche eines Teilbereiches des Innenraumes eines Kraftfahrzeuges bildenden Belag kaschiert ist.

13. Wärmeübertrager nach Anspruch 12, **dadurch gekennzeichnet, daß** der Außenmantel zweischalig ausgebildet ist und eine Schale die Deckschale der Instrumententafel bildet.

14. Wärmeübertrager nach Anspruch 3, **dadurch gekennzeichnet, daß** die Rohre mit weiteren Rohren zu einem tragenden Skelett zusammengefügt sind, das als Tragteil in ein Fahrzeug eingesetzt ist.

15. Verwendung eines Wärmeübertragers nach einem der Ansprüche 1 bis 14 für eine Klimaanlage eines Kraftfahrzeuges.

## Claims

1. Heat exchanger for a heating or air-conditioning unit of a vehicle, comprising several guide channels, for a heating or cooling medium, running parallel to each other and opening into receiving cases, and flow channels, for the air to be temperature-regulated, that touch the outer surfaces of these guide channels, whereby the guide channels are formed by several compartments (12), of a vertical section (9) in the form of a flat tube which, bordering on the compartments (12), is provided with ribs (15) projecting outwards, the said compartments being separate and lying next to each other,
**characterized in that**
the spaces (16) between the ribs are formed, by means of an outer shell, as flow channels for the air to be temperature-regulated,
and **in that** there are pipes (13, 14) on the outermost compartments as inlets and outlets, for the heating or cooling medium, which are aligned parallel to the compartments and which, at a set length serving as a receiving casing, are provided with openings (21) which open into area (22), of the flat tube (10), in which the crosspieces (11) between the compartments (12) are removed.

2. Heat exchanger in accordance with claim 1, **characterized in that** the openings in the pipes (13, 14) are formed as slits (21).

3. Heat exchanger in accordance with claim 1, **characterized in that** the pipes (13, 14) are formed as reinforcing bracing tubes.

4. Heat exchanger in accordance with claim 1, **characterized in that** the pipes (13, 14) are part of the vertical section (9).

5. Heat exchanger in accordance with one of claims 1 to 4, **characterized in that** the vertical section is an extrusion (9).

6. Heat exchanger in accordance with claim 1, **characterized in that** the areas (22), which are part of the collection spaces, have the form of right-angled triangles, whereby the short sides of the right-angled triangles are formed by the sections of the pipes (13, 14) which are provided with openings (21) and by a closed edge (24) of the extrusion (11), and the hypotenuse is formed as a straight line (23 and 23') connecting the free ends (11a) of the crosspieces (11).

7. Heat exchanger in accordance with claim 6, **characterized in that** the straight lines (23, 23') run at an angle of 45° to the longitudinal axes of the compartments (12).

8. Heat exchanger in accordance with claim 6, **characterized in that** the inlet and outlet area (22) is in each case equally disposed, but disposed such that the end stretches (23, 23') run parallel to each other.

9. Heat exchanger in accordance with claim 1, **characterized in that** the ribs (15) are disposed in a zigzag form.

10. Heat exchanger in accordance with claim 1, **characterized in that** the outer shell is formed of an expanded plastic case (17).

11. Heat exchanger in accordance with claim 1, **characterized in that** the ribs (15, 15') and the pipes (13, 14, 13', 14') are surrounded by a casing (30) that lies inside the expanded plastics case.

12. Heat exchanger in accordance with claim 1, **characterized in that** the outer shell is concealed with a lining directly forming the inner surface of a part area of the interior compartment of a vehicle.

13. Heat exchanger in accordance with claim 12, **characterized in that** the outer shell is developed as a double cover and one cover is the cover of the instrument panel.

14. Heat exchanger in accordance with claim 3, **characterized in that** the pipes are, with further pipes, brought together to form a skeleton framework that is inserted into the vehicle as a support.

15. Use of the heat-exchanger in accordance with one of claims 1 to 14 for an air-conditioning unit of a vehicle.

## Revendications

1. Echangeur de chaleur pour un système de chauffage ou de climatisation d'un véhicule automobile, se composant de plusieurs conduits de guidage s'étendant en étant parallèles entre eux et débouchant dans des bacs collecteurs utilisés pour un milieu chauffant ou refroidissant, et de conduits d'écoulement se trouvant au contact des surfaces extérieures de ces conduits de guidage utilisés pour l'air à tempérer, où les conduits de guidage sont formés par plusieurs chambres (12) d'un profilé (9) se présentant sous la forme d'un tube plat, ces chambres étant séparées les unes des autres par des nervures (11) et placées les unes à côté des autres, lequel tube plat, contigu aux chambres (12), est doté d'ailettes (15) en saillie vers l'extérieur,
**caractérisé**
**en ce que** les espaces (16) existant entre les ailettes sont configurés, par un gainage de protection (17), comme des conduits d'écoulement utilisés pour l'air à tempérer, et
**en ce qu'**il est prévu des tubes contigus (13, 14), latéralement, aux chambres placées le plus à l'extérieur, servant à l'alimentation et à l'évacuation du milieu chauffant ou refroidissant, lesquels tubes sont orientés parallèlement aux chambres et, sur une longueur prédéterminée (1) servant de bac collecteur, sont dotés d'ouvertures (21) qui débouchent dans des zones (22) du tube plat (10), zones dans lesquelles sont supprimées les nervures (11) existant entre les chambres (12).

2. Echangeur de chaleur selon la revendication 1, **caractérisé en ce que** les ouvertures, dans les tubes (13, 14), sont configurées comme des fentes (21).

3. Echangeur de chaleur selon la revendication 1, **caractérisé en ce que** les tubes (13, 14) sont configurés comme des tubes supports de renfort.

4. Echangeur de chaleur selon la revendication 1, **caractérisé en ce que** les tubes (13, 14) font partie du profilé (9).

5. Echangeur de chaleur selon l'une quelconque des revendications 1 à 4, **caractérisé en ce que** le profilé est un profilé extrudé (9).

6. Echangeur de chaleur selon la revendication 1, **caractérisé en ce que** les zones (22), qui sont des parties des espaces collecteurs, présentent la forme de triangles rectangles où les côtés de l'angle droit sont formés par les parties des tubes (13, 14), dotées des ouvertures (21), et par une arête fermée (24) du profilé extrudé (9), et l'hypoténuse est formée comme une droite (23 ou 23') reliant les extrémités libres (11a) des nervures (11).

7. Echangeur de chaleur selon la revendication 6, **caractérisé en ce que** les droites (23, 23') s'étendent suivant un angle inférieur à 45° par rapport aux axes longitudinaux des chambres (12).

8. Echangeur de chaleur selon la , revendication 6, **caractérisé en ce que** les zones d'alimentation et d'évacuation (22) sont respectivement identiques mais disposées de manière telle, que les droites de fermeture (23, 23') s'étendent en étant parallèles entre elles.

9. Echangeur de chaleur selon la revendication 1, **caractérisé en ce que** les ailettes (15) sont disposées en forme de zigzag.

10. Echangeur de chaleur selon la revendication 1, **caractérisé en ce que** le gainage de protection est formé par un boîtier (17) en mousse de matière plastique.

11. Echangeur de chaleur selon la revendication 10, **caractérisé en ce que** les ailettes (15, 15') et les tubes (13, 14, 13', 14') sont entourés par une enveloppe (30) qui se trouve à l'intérieur du boîtier en mousse de matière plastique.

12. Echangeur de chaleur selon la revendication 1, **caractérisé en ce que** le gainage de protection est recouvert par un revêtement formant directement la surface intérieure d'une zone partielle de l'habitacle d'un véhicule automobile.

13. Echangeur de chaleur selon la revendication 12, **caractérisé en ce que** le gainage de protection est constitué en deux parties, et une coque forme la coque de recouvrement du tableau de bord.

14. Echangeur de chaleur selon la revendication 3, **caractérisé en ce que** les tubes sont assemblés avec d'autres tubes, pour former une ossature porteuse qui est utilisée comme pièce porteuse dans un véhicule.

15. Utilisation d'un échangeur de chaleur selon l'une quelconque des revendications 1 à 14, pour un système de climatisation d'un véhicule automobile.
